# EUROPEAN PATENT SPECIFICATION

(11) **EP 4 246 404 B1**
(45) Date of publication and mention of the grant of the patent: **15.10.2025**
(21) Application number: 23169581.8
(22) Date of filing: 19.12.2014
(51) Int. Cl.: G06Q 20/32, G06Q 20/02, G06F 21/34, G06F 21/32, G06Q 20/40

(54) **SYSTEM, USER DEVICE AND METHOD FOR AN ELECTRONIC TRANSACTION**
SYSTEM, BENUTZERVORRICHTUNG UND VERFAHREN FÜR EINE ELEKTRONISCHE TRANSAKTION
SYSTÈME, DISPOSITIF UTILISATEUR ET PROCÉDÉ POUR TRANSACTION ÉLECTRONIQUE

(30) Priority: 20.12.2013 NL 2011998
(43) Date of publication of application: 20.09.2023
(62) Divisional of application: 14833551.6
(73) Proprietor: Chiptec International Ltd., Willemstad, Curaçao (AN)
(72) Inventor: JILDERDA, Anne Ayolt, 5651 CA Eindhoven (NL)
(74) Representative: Jilderda, Anne Ayolt

(56) References cited:
- EP-A1- 2 234 423
- WO-A1-2013/095434
- WO-A1-2013/187789
- WO-A1-99/24938
- GB-A- 2 368 951

## Description

The present invention relates to a system for performing a transaction electronically, comprising a transaction server able and configured to offer and perform a transaction for a user, a personal user device of an authorized user, capturing means able and configured to capture selected biometric data of the user in electronic form, verification means able and configured to compare captured biometric data of the user to stored biometric data of the authorized user and, in the case of sufficient correspondence therebetween, to generate a verification confirmation, and telecommunication means which enable the user to exchange data comprising a verification confirmation with the transaction server over a telecommunication connection in order to authorize the transaction, wherein the transaction server is able and configured to receive the verification confirmation and, subject to a successful user verification apparent therefrom, to perform the transaction.

The growth of the Internet has resulted in consumers and companies increasingly purchasing products and services in digital manner, i.e. electronically. The market share of Internet shops has thus experienced a strong growth in recent years, this at the expense of the turnover realized by physical shops, and there appears to be no end in sight to this growth. An extension hereof is payment traffic, which in digital form has become indispensable in modern society, particularly as a gauge of these increasing Internet sales. As a result of these developments more and more transactions take place only in electronic form, whether they involve electronic payment traffic, credit cards or purchases of products and/or services. With a view hereto a company, institution or organization sets up an often specific transaction platform of one or more transaction servers involved in an electronic transaction from which an electronic transaction can be remotely requested and which is able and configured to validate all conditions for the transaction and to identify the user as authorized user.

A reliable verification of the (end) user is invaluable in all of this in order to prevent abuse and fraud. For payment traffic through banks use is currently made for this purpose of a combination of a personal (PIN) code, which the user knows and has to enter, in combination with a bank card with bank card reader. Electronic credit card transactions are even less secure because, in addition to information which can be read directly from the card, it suffices therefor in many cases to enter only one or several authorization codes. As soon as these codes fall into the wrong hands, electronic transactions can be authorized without the involvement of the user. It is no wonder that the amount of Internet crime and abuse is growing together with the share of Internet in electronic payment traffic. Efforts to curb these activities have up to now not infrequently resulted in a public debate about privacy protection and in time-consuming procedures, possibly in combination with special hardware requirements, this being an obstacle to large-scale introduction thereof.

EP2234423A1 is prior art disclosing authentication for accessing a service.

The present invention has for its object, among others, to provide a system, method and user device with which a verification of a user during an electronic transaction can be brought to an as yet unmatched level of security in a manner which will also be easily accepted by the user/consumer from a viewpoint of privacy protection.

In order to achieve the stated objective, a system of the type described in the preamble has the feature according to the invention that the user device comprises primary processing means with at least one primary processor unit, primary memory means and a primary control system, which primary processing means are coupled to the capturing means by means of the primary control system, that the user device comprises an exchangeable module with secondary processing means, comprising at least one secondary processor unit, secondary memory means and a secondary control system, that the stored biometric data of the authorized user are stored in the secondary memory means of the exchangeable module, that the secondary processing means of the exchangeable module are able and configured to make a request to the capturing means in order to obtain the captured biometric data, that the exchangeable module comprises the verification means, wherein the secondary processor unit is able and configured on the basis of program code loaded therein to compare the captured biometric data of the user to biometric data of the authorized user stored in the secondary memory means and, in the case of sufficient correspondence, to generate the verification confirmation, and that the program code for the secondary processor unit has been loaded therein without action on the part of the user.

It is important here that the biometric data used for the verification only have to be stored in the device itself and need not leave the device. This is because the user verification takes place wholly in and by the device itself on the basis of captured biometric data of the user. This is in sharp contrast to many conventional systems for biometric verification of a user wherein the privacy-sensitive biometric data are always stored together with the identity of the user in one or more central databases. The invention hereby nevertheless realizes a system which is particularly reliable because the transaction will only be authorized if the user can demonstrate that he/she has something, i.e. the personal user device with the program code (verification software) therein, and can moreover demonstrate that he/she actually matches the biometric characteristics of the authorized user which are stored in the device.

An authenticity of the verification confirmation can if desired be further guaranteed by means of a preferred embodiment of the system according to the invention, characterized in that the processing means are able and configured to encrypt the verification confirmation and exchange it in encrypted form with the transaction server, wherein the transaction server is provided with decoding means able and configured to decipher the verification confirmation. The encryption algorithms necessary for coding and decoding of the message can be provided wholly in the program code with which the biometric comparison is also performed. A number of specific data of the user, of the device used by the user for the verification, or other data in the message can also be encrypted here in order to reduce the chance of messages being intercepted, so-called phishing, and subsequently duplicated.

The system according to the invention does not require any specific hardware per se in respect of the user device other than that it has or can have biometric capturing means in combination with processor means and memory means with which to be able to perform the desired verification and communication means to be able to exchange the result of the verification with the transaction server. Loading an adequate program code into such a hardware environment can make it suitable for participation in the system according to the invention. The processing means per se can perform the verification on the basis of a program code which has been loaded into the user device by the user. Suitable verification software can thus be stored and loaded by the user him/herself, for instance in the form of a so-called app(lication) or in other manner as a program executable within the associated control system, in order to make the device suitable for the verification. The above described further safeguards, such as an encryption of message traffic with the transaction server, can if desired be implemented in such software.

A higher degree of reliability is however obtained according to the invention with the system according to the invention in that the secondary processing means, which comprise the verification means, are provided wholly on the exchangeable module, wherein the processing means comprise at least one secondary processor unit with secondary memory means and a secondary control system, and the secondary processor unit and secondary memory means are accommodated in the exchangeable module in the user device. The program code executed by the secondary processing means is loaded therein without action on the part of the user. The application software and hardware used for the verification can thus be wholly embedded in a separate module. Other than in the case of a program code to be loaded by the user him/herself, the application software need not in this case be shared with the user, and it suffices to provide the user with the module for use in the device. This can be provided with the necessary safeguards. A preferred embodiment of the system according to the invention has the feature in this respect that the module has been issued by a trusted body.

It is important to determine that neither the privacy-sensitive identity data and biometric data of the user nor the program code used for the verification need thus leave the module. Only the optionally adequately encrypted verification confirmation is exchanged with the "outside world" as an indication of whether the user is actually the authorized user of the device and is as such authorized to perform the transaction. The module with the program code and the biometric and personal data of the authorized user therein can in turn be secured if desired against unlawful access (tampering) by third parties in a manner assumed to be sufficiently well known to a person with ordinary skill in the art. Within the context of the invention the term "module" must otherwise be broadly interpreted so that it is understood to mean not only a form-retaining body but also any other form-retaining or flexible body. This also relates particularly to different forms and sizes of plug-in cards, on or in which is integrated a microprocessor with memory, such as so-called smart cards, chip cards and SIM cards.

It is possible to make use for the module of a device developed specifically for the purpose which is issued at least substantially solely for this purpose or is connected to hardware which is often already available in a personal user device for telecommunication, such as for instance a (smart) phone, PDA or tablet computer. In this context a further particular embodiment of the system according to the invention has the feature that the user device comprises a personal telecommunication device of a subscriber to a telecommunication network, and that the module comprises a plug-in module which is placeable in the device and which enables the user device to perform a subscriber verification in the telecommunication network and to establish and maintain the telecommunication connection therein.

Such a module is usually designated a SIM (single inline module) card and is primarily utilized in a public telecommunication network to identify the user device (subscriber) in the network, on the basis of which access to the network is optionally facilitated and use of the network is charged to the user. In this embodiment the processor and memory capacity already present on such a module for this purpose are also utilized to carry out the biometric verification of the user in the context of a transaction desired by him/her. In addition to or instead of authorizing a payment order, such a transaction can here also comprise access to the telecommunication network which is offered by a telecommunication server in that network, in order to thus prevent abuse of a stolen or otherwise misplaced telecommunication device.

In a further preferred embodiment the system according to the invention has the feature that the user device comprises input means which are coupled to the processing means and which enable the user to enter a personal access code and provide this in electronic form to the processing means. This embodiment is based on the insight that a conclusive verification of the user is thus obtained. This is because the user has to:
a. have knowledge which the authorized user is deemed to know, i.e. the access code,
b. have the physical processing means of the user device to enable processing of the transaction on the transaction server, and moreover
c. match the biometric data of the authorized user stored in the memory means of the user device so that a positive verification confirmation can be sent which authorizes the transaction. A check of the access code obtained from the input means can be performed in different ways. In a first particular embodiment the system according to the invention is characterized for this purpose in that the processing means are able and configured to compare the access code obtained from the input means to an access code stored in the memory means. In a second particular embodiment the system is characterized in that the processing means are able and configured to exchange the access code obtained from the input means with the transaction server and that the transaction server is able and configured to compare the obtained access code to an access code of the authorized user stored in or at the transaction server. A combination of the two is also possible, with a shared access code or individual, optionally identical access codes.

Diverse biometric data of the user can serve within the context of the invention to verify the user. As such, a particular embodiment of the system according to the invention has the feature that the capturing means comprise at least one sensor from a group comprising an image sensor, a microphone and a fingerprint sensor. Facial recognition or iris recognition is for instance thus possible making use of the image sensor. Voice recognition can take place using the microphone, while the fingerprint sensor will enable the user device to make and compare a fingerprint capture to fingerprint data stored in the memory means of the device.

The comparison of the biometric data captured or recorded from the user to the stored biometric data of the authorized user can take place in the raw form in which these data have been recorded by the capturing means and stored in the memory means, wherein a non-data-specific image processing, such as a data compression or image enhancement, has optionally been performed thereon. Such a comparison of raw biometric data does however require relatively great computing power and is moreover relatively susceptible to physical variations, such as damage to the captured finger(print), cosmetic variations in the face such as beard growth, wearing glasses and make-up, or conditions of the vocal cords, for instance in the case of a cold.

In order to counteract the influence of such and other biometric variations and nevertheless enable a reliable biometric verification, a further preferred embodiment of the system according to the invention has the feature that the processing means are able and configured to process raw biometric data recorded by the capturing means and to derive therefrom one or more characterizing biometric parameters of the user which identify the captured biometric data in at least substantially unique manner, that the stored biometric data of the authorized user comprise at least one corresponding characterizing biometric parameter and that the processing means are able and configured to compare the at least one characterizing biometric parameter of the user obtained from the raw biometric data to the stored at least one characterizing biometric parameter of the authorized user, and more particularly that the at least one characterizing biometric parameter comprises at least one entity from a group comprising numeric values, vectors and matrices.

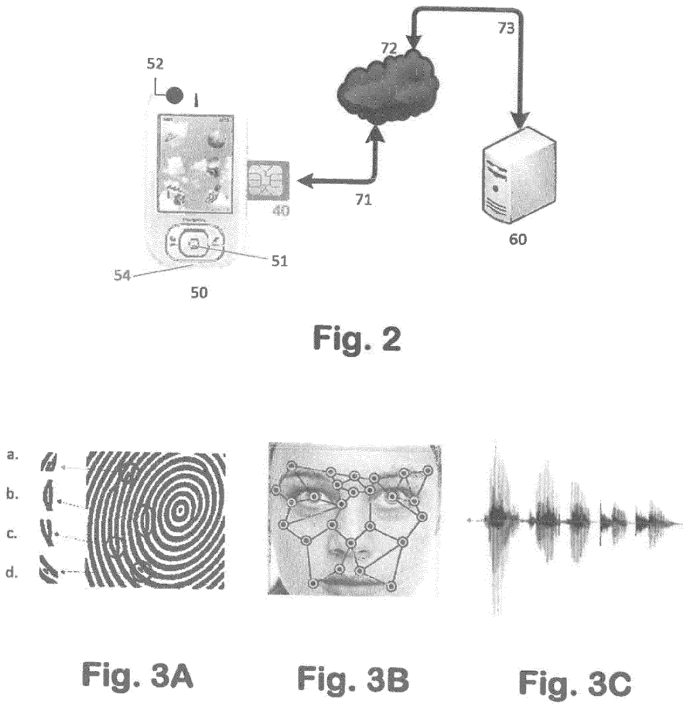

It is not so much raw biometric data or characteristics which are compared to each other here, but instead numeric parameters which have been derived therefrom by calculation on the basis of tested and specific algorithms. Figures 3A-3C show examples of such parameterization algorithms. Such an algorithm is specifically designed and configured for analysis of specific biometric aspects. For fingerprint recognition a raw fingerprint will as such be scanned for the presence of anomalies therein, so-called minutiae, and the type and location will be stored as respectively values and vectors. This relates to incidences and locations of for instance ridge endings (a), enclosures (b), bifurcations ^{©}, islands (d), see figure 3A, and the like in the raw fingerprint. These numeric data are stored as characterizing parameters of the fingerprint instead of or in addition to the raw fingerprint, and subsequently provide an unambiguous characterization of the original fingerprint.

For facial recognition it is possible using algorithms specifically adapted thereto to identify geometric dimensions and patterns which enable an unambiguous recognition of a face in similar manner, see figure 3B. For voice recognition, figure 3C, use can be made of an audiogram derived therefrom and a spectral analysis performed thereon, which retrieves specific, characteristic ratios and values from an audio spectrum.

Once a relevant numeric value has been determined from the biometric capture captured from the user, it can be compared one-to-one to a corresponding numeric value of the authorized user such as is recorded in the memory means of the device. It has been found that such parameters are relatively insusceptible to biometric variations as described above.

The present invention also relates to a user device for use in the above described system according to the invention, comprising at least a primary processing means with a primary control system, which comprise at least a primary processor unit and primary memory means, wherein the primary processing means are coupled to capturing means able and configured to electronically record at least one physical feature of a user, comprising an exchangeable module in the device and provided with secondary processing means with a secondary control system, which secondary processing means comprise at least a secondary processor unit and secondary memory means, wherein the primary processing means and the secondary processing means are coupled to each other and are able and configured for mutual co-action, and comprising telecommunication means which are able and configured to maintain a telecommunication connection.

According to the invention such a user device is characterized in that biometric data of an authorized user are stored in the secondary memory means, that the primary processing means are able and configured to generate the electronic registration of the at least one physical feature of the user in optionally processed form to the secondary processing means, that the secondary processing means are able and configured on the basis of a program code loaded therein to compare the electronic registration of the at least one physical feature of the user obtained from the primary processing means to the biometric data of the authorized user stored in the secondary memory means and, when sufficient correspondence is determined, to generate a verification confirmation and that the secondary processing means are able and configured to exchange the verification confirmation with a transaction server by means of the telecommunication means and a telecommunication connection maintained thereby.

The device thus comprises primary and secondary processing means with memory means in a master-slave configuration, wherein the secondary processing means are responsible together with the secondary memory means for the actual verification of the captured biometric registration of the user. Because the secondary processing means and memory means are provided here in or on an exchangeable module in the device they can be issued, together with the biometric verification software applied therein, particularly by a trusted source, and managed separately of the device. Abuse or manipulation of the verification software can thus be prevented. As device it is otherwise possible to suffice with for instance a regular, generally available personal telecommunication device such as a smart phone, PDA, notebook, laptop or tablet computer, which provides the telecommunication means and the capturing means.

In respect of the telecommunication connection over which the verification confirmation is exchanged with the transaction server in the system according to the invention, a wide range can be utilized. As such, a particular embodiment of the user device according to the invention has the feature that the telecommunication connection comprises at least one data communication connection from a group of a telecommunication connection in a public telecommunication network, a network connection in a wired and/or wireless private computer network, and an isolated, dedicated data connection on the basis of radiographic or optical data transfer, such as Infrared, Bluetooth and Near Field communication.

In order to prevent interception or manipulation of the verification confirmation a further particular embodiment of the user device is characterized according to the invention in that the secondary processing means are able and configured to encrypt the verification confirmation and send it in encrypted form. The coding software applied for such an encryption can also be executed here by the secondary processing means and accommodated together therewith in the module. This coding software can thus also be protected both logistically and physically.

In this context a further preferred embodiment of the user device has the feature according to the invention that the module comprises a plug-in module which enables the user device to perform a subscriber verification in a telecommunication network and to at least partially establish and maintain a telecommunication connection therein, in particular a module which gives the device access to a public telecommunication network, more particularly a public telephone network. The plug-in module applied therein, usually referred to as SIM or SIM card, is usually issued by a provider of telecommunication services in the telecommunication network. This provider can function here as trusted body which can be relied upon to also provide on such a module the program code and related software intended for the verification.

In order to reduce the influence of cosmetic and other physical variations in the user a preferred embodiment of the user device according to the invention has the feature that the stored biometric data of the authorized user comprise at least one characterizing biometric parameter which has been calculated from a biometric capture of the authorized user on the basis of a tailored algorithm and which identifies the biometric capture in at least substantially unique manner. The relevant biometric characteristics of the authorized user are thus stored not so much in raw form but in the form of numeric parameters which have been calculated on the basis of a tailored algorithm from a biometric capture of the authorized user.

Prior to the parameterization of the capture, it can optionally be processed on the basis of usual software for image enhancement or data compression. A characteristic difference is that such a processing leaves a form of the original capture essentially unchanged, while it will no longer be possible to recognize or derive the actual capture from the parameters determined therefrom. Such parameters, such as an eye-eye distance, eye-nose-eye angle, fingerprint minutiae and voice analysis data, do however characterize the original capture in at least substantially unique manner, apart from for instance identical twins and coincidental similarities, so that a reliable verification can nevertheless be performed on the basis thereof. If combined with personal knowledge, such as a personal access code, even a coincidental, unintended biometric similarity between user and authorized user can be excluded from a positive verification confirmation.

A further preferred embodiment of the user device has the feature according to the invention that the secondary processing means are able and configured to calculate at least one characterizing biometric parameter from the electronic registration of a physical feature of the user and to compare it to a stored corresponding biometric parameter of the authorized user. The secondary processing means are thus able to perform the above described parameterization on the (raw) registration of the user. The algorithm intended and tailored for this purpose here forms part of the program code which is loaded or at least loadable into the secondary processing means. This algorithm can thereby be issued together with the module by a trusted body and ensures that a parameterization of the biometric capture of the user takes place in the same manner as the parameterization of the biometric source data of the authorized user, so that the same outcome can at least all but certainly be expected if they correspond.

The invention also relates to a method for performing an electronic transaction with a transaction server able and configured to offer and perform a transaction in electronic form, wherein a user makes use of a user device with communication means in order to exchange transaction data with the transaction server, wherein the user device is provided with capturing means with which the user records biometric data of the user in electronic form, wherein the user device is provided with memory means in which biometric data of an authorized user are stored in electronic form, wherein the user device is provided with processing means able and configured to compare the biometric data captured from the user to stored biometric data of the authorized user and, in the case they correspond sufficiently, to exchange a verification confirmation with the transaction server for the purpose of authorizing the transaction.

According to the invention such a method has the feature that the memory means and processing means form part of a unit exchangeable in the user device, that biometric data of the authorized user have been captured from the authorized user by or at least on behalf of a trusted body and have been stored in the memory means of the unit, and that the unit has been issued to the user by or at least on behalf of the trusted body in order to received in the user device.

The invention will be further elucidated hereinbelow on the basis of an exemplary embodiment and an accompanying drawing. In the drawing:
- figure 1: shows a schematic view of an exemplary embodiment of the issuing of an exchangeable module for the purpose of a system according to the invention;
- figure 2: shows a schematic view of an exemplary embodiment of a system according to the invention; and
- figures 3A-C: show a number of examples of biometric parameters as can be applied within the scope of the present invention.

The figures are otherwise purely schematic and not drawn to scale. Some dimensions in particular may be exaggerated to greater or lesser extent for the sake of clarity.

Corresponding parts are designated as far as possible in the figures with the same reference numeral.

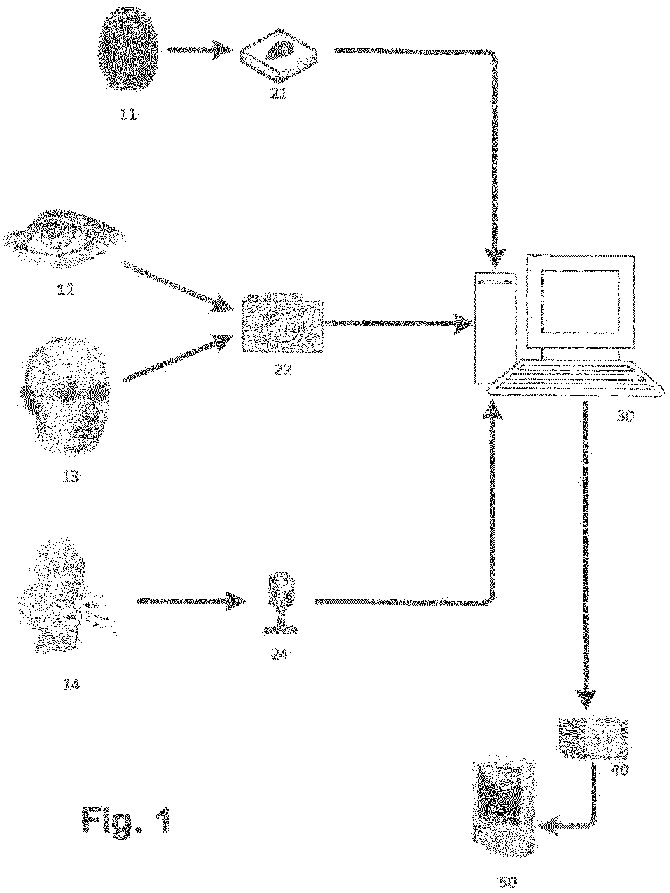

Figure 1 shows schematically that one or more physical, biometric characteristics 11..14 are captured of an authorized user. The user presents him/herself for this purpose at a trusted body, such as for instance a bank, a credit card company, a notary, a public authority or a telecommunication provider, which has the equipment suitable for the system according to the invention. The trusted body checks the identity and, using equipment provided for the purpose, captures one or more physical features of the authorized user. Shown in this example is that a fingerprint 11 can be captured by means of a fingerprint sensor 21. For an iris scan 12 or face capture 13 an image sensor is available in a camera station 22, while a voice 14 of the authorized user can be captured using a microphone 24 provided for the purpose.

The thus obtained biometric capture is transmitted to a computer station 30 with which an analysis of the raw capture is performed making use of analysis software provided for the purpose. Biometric parameters are calculated here from the raw capture, such as for instance fingerprint minutiae, characteristic facial proportions and dimensions of the face, and spectral ratios or other characteristics in the audio spectrum of the voice. Thus derived and calculated from the raw biometric data are one or more numeric values with which it may not be possible to regenerate the biometric data but with which they can however be identified in at least substantially unique manner. From computer station 30 these parameters are stored in memory means of a plug-in module 40 together with personal data which identify the authorized user.

In addition to electronic memory means the plug-in module 40 also comprises processing means with which the thus stored biometric parameters can be compared to corresponding parameters which are derived later from an associated biometric capture of the user during a verification of the user desired at that time. The program code necessary for this verification is likewise stored in module 40 and during use can be loaded and executed by the processing means of the module. In this example plug-in module 40 comprises a so-called SIM card and also serves for identification and access in a public telecommunication network. The software and user data necessary herefor are likewise stored in the memory means of module 40. Module 40 is issued to the authorized user by the trusted body so that he/she can place module 40 in a personal user device 50 with which the user can identify him/herself in the system according to the invention and can if desired authorize an electronic transaction.

Figure 2 shows schematically an exemplary embodiment of a system according to the invention which enables a user to authorize an electronic transaction desired by him/her and offered by a transaction server 60. In addition to transaction server 60, the system comprises a personal user device 50 of the user and a communication connection 71,72,73 maintained at least temporarily therebetween.

For transaction server 60 use is made in this example of a telebanking server able and configured to exchange data with the user device, optionally via a secure tunnel 73 and Internet 72. Server 60 has for this purpose a suitable Internet user interface which is for instance maintained by a web server optionally integrated therewith or therein. The user device comprises in this example a smart phone provided with a conventional image sensor 52 and a microphone 54, which can optionally be supplemented with a fingerprint reader. Primary processing means are provided in the user device by a manufacturer thereof, together with primary memory means and a primary control system, in order to enable device 50 to fulfil its normal functions.

In addition, user device 50 comprises the plug-in module 40 which is described with reference to figure 1 and in which secondary processing means are provided together with secondary memory means in which the biometric parameters of the authorized user are stored together with biometric verification program code. A secondary control system in the module moreover serves to maintain a telecommunication connection 71 with Internet 72 via a public mobile telephone network.

Making use of the user device of the authorized user and the communication connection 71..73 maintained thereby, transaction server 60 is requested to perform an electronic transaction. This involves for instance a payment order presented by a telebanking server, a credit card transaction or other banking transaction. To this end the user logs in to server 60 with personal user device 50 and, when requested, identifies him/herself with the server by entering a personal access code together with his/her user data. The user device comprises for this purpose input means in the form of a keypad and/or touch-sensitive screen which allows the user to do this from the primary control system.

A first and second verification of the user are thus already realized in that the device can first be identified on the basis of a plug-in module 40 which is legally issued and registered as such, and which is for instance recognized from an issue code and serial number stored therein in encrypted or other manner, and the user then has to identify him/herself with his/her personal user data and access code. These verification steps hereby require something which the user should have, i.e. a legitimate plug-in module, registered as such at the transaction server, optionally in mandatory combination with the device, and something which in principle only the authorized user knows, i.e. his/her personal log-in data and access code.

Once administrative data relating to the desired transaction have optionally also been entered or exchanged in other manner with the server, the transaction has to be authorized by the authorized user before being performed by the server. The user can identify him/herself for this purpose by recording a biometric capture of external characteristics designated for the purpose of him/herself using the user device. User device 50 also comprises for this purpose capturing means in the form of one or more of the fingerprint reader 51, image sensor 52 and microphone 54. In this example image sensor 52 is used for a face capture of the user in order to verify his/her identity. A third verification of the user is thus performed on the basis of a physical state of the authorized user with which the user thus actually has to comply, i.e. the one or more biometric characteristics stored in the module.

If the transaction server wishes to receive an authorization, an associated request is sent to user device 50 by the server via the communication connection 71,72,73 maintained thereby. In addition to the telecommunication connection in a public communication network applied in this example, such as a public telephone network, this can also involve a wireless network connection in a private, optionally virtual, data network which takes a wholly or partially wireless form. It is also possible for the communication connection to comprise a local, preferably wireless, one-to-one coupling to server 60 in accordance with a standardized communication protocol, as is for instance the case in infrared signal transfer, radio techniques such as Bluetooth and so-called Near Field Technology. In this case the transaction server comprises for instance a local payment terminal or local access terminal. For the data exchange and/or communication connection to the server it is additionally also possible to make use of a private, unique (proprietary) communication protocol, whereby an extra security is built in.

The secondary processing means provided in module 40 respond on the basis of the program code loaded therein to such an authorization request from the server with a message to the user to make the relevant biometric capture. The user is requested in this case to make a face capture with image sensor 51. The electronic registration resulting therefrom is optionally compressed and optimized in the primary control system on the basis of standard software for image processing and image enhancement. The thus obtained raw biometric capture is generated from the primary processing means to the secondary processing means.

The program code loaded therein is able and configured to derive biometric parameters from the raw capture in the same or at least similar way as applied in the registration of the biometric parameters of the authorized user during issue of module 40. The parameters thus extracted from the raw capture are then compared by the secondary processing means to the biometric parameters of the authorized user stored in the secondary memory means. In the case they correspond sufficiently, a positive verification confirmation will be exchanged with the server via the communication connection as indication that the user is actually the authorized user. This verification confirmation forms an authorization for the requested transaction, which will be further continued and completed only upon receipt thereof by the server when other conditions, such as sufficient funds, have also been complied with.

A particularly reliable user verification is thus possible in a network without privacy-sensitive biometric data having to be known or having to be made known in the network. The biometric data used for the verification do not after all leave the user device. Only the verification confirmation composed by the user device and resulting from a layered verification is sent. The program code responsible therefor is issued by the trusted body and is embedded in the hardware of the module without any action on the part of the user, so that it too can be secured against unauthorized access. Encrypted messages are preferably sent over a secure line for the data exchange between the user device and the server, wherein the coding software and the decoding software and keys have likewise been provided in the module without any action on the part of the user.

Although the invention has been further elucidated above on the basis of only a single example, it will be apparent that the possible applications are not limited to the given example. On the contrary, numerous and various other embodiments and variations are possible within the scope of the invention for the person with ordinary skill in the art.

Use is thus made in the example of a telecommunication connection between the user device and the transaction server via the Internet, wherein the transaction server for instance comprises a web server which offers and performs a banking or other type of monetary transaction as desired. The system according to the invention can however also be deployed more locally, wherein the transaction server for instance comprises a payment terminal or carries out access management, and the communication therebetween is effected via a private wireless connection such as Wi-Fi, Infrared, Near Field technology and Bluetooth.

In addition to being used for financial transactions, the system according to the invention can also be utilized for other types of transaction, wherein a reliable proof of identity, i.e. identification, of a user is important, such as for instance in the case of an electronic patient file, an electronic travel document (passport), electronic voices or access management in or at buildings, installations and sites.

As user device use is advantageously made here of a smart phone with the capturing means usually available therein. A tablet computer, notebook or laptop, assuming they are provided with adequate communication means and biometric capturing means, are however also suitable for application within the scope of the invention. In addition to a master-slave setup as in the given example, it is also possible to make use here of a configuration wherein all functions are performed from a primary and sole control system and the program code has been loaded therein, optionally via the user.

In the shown examples use is made of an exchangeable plug-in module in the device and in which the biometric data of the user and the actual verification software and verification hardware are provided. This is particularly recommended from a logistical viewpoint since the verification means can thus be issued by a trusted body, per se irrespective of the device. This does not however alter the fact that a properly equipped device can also complete the whole verification on its own, i.e. in the primary control system.

## Claims

1. System for performing a transaction electronically, comprising:
- a transaction server (60) able and configured to offer and perform a transaction for a user,
- a personal telecommunication device (50) of a subscriber to a telecommunication network,
- capturing means (51-54) able and configured to capture selected biometric data (11-14) of the user in electronic form,
- verification means able and configured to compare the captured biometric data (11-14) of the user to stored biometric data (11-14) of the authorized user and, in the case of sufficient correspondence there between, to generate a verification confirmation, and - telecommunication means which enable the user to exchange data comprising a verification confirmation with the transaction server (60) over a telecommunication connection (71-73) in order to authorize the transaction,
wherein the transaction server (60) is able and configured to receive the verification confirmation and, subject to a successful user verification apparent therefrom, to perform the transaction, and
wherein the personal telecommunication device (50) comprises primary processing means with at least one primary processor unit, primary memory means and a primary operating system, which primary processing means are coupled to the capturing means (51-54) by means of the primary operating system,
wherein the personal telecommunication device (50) comprises a plug-in module (40) which is placeable in the device and which enables the personal telecommunication device to perform a subscriber verification in the telecommunication network and to establish and maintain the telecommunication connection therein,
wherein said plug-in module comprises secondary processing means that are able and configured to make a request to the capturing means (51-54) in order to obtain the captured biometric data (11-14), comprising at least one secondary processor unit, secondary memory means and a secondary operating system,
wherein the stored biometric data (11-14) of the authorized user are stored in the secondary memory means of the plug-in module (40),
wherein the plug-in module (40) comprises the verification means, and
wherein the secondary processor unit is able and configured on the basis of program code loaded therein to compare the captured biometric data (11-14) of the user to the biometric data (11-14) of the authorized user stored in the secondary memory means and, in the case of sufficient correspondence, to generate the verification confirmation without revealing privacy-sensitive identity data or biometric data (11-14) of the user or the program code used for the verification, thereby authorizing the transaction.

2. System as claimed in claim 1, **characterized in that** the plug-in module with the program code for the secondary processor unit has been issued by a trusted body.

3. System as claimed in claim 1 or 2, **characterized in that** the processing means are able and configured to encrypt the verification confirmation and exchange it in encrypted form with the transaction server, wherein the transaction server is provided with decoding means able and configured to decipher the verification confirmation.

4. System as claimed in one or more of the foregoing claims, **characterized in that** the personal telecommunication device comprises input means which are coupled to the processing means and which enable the user to enter a personal access code and provide this in electronic form to the processing means.

5. System as claimed in claim 4, **characterized in that** the processing means are able and configured to compare the access code obtained from the input means to an access code stored in the memory means.

6. System as claimed in claim 4 or 5, **characterized in that** the processing means are able and configured to exchange the access code obtained from the input means with the transaction server and that the transaction server is able and configured to compare the obtained access code to an access code of the authorized user stored in or at the transaction server.

7. System as claimed in one or more of the foregoing claims, **characterized in that** the capturing means comprise at least one sensor from a group comprising an image sensor, a microphone and a fingerprint sensor.

8. System as claimed in one or more of the foregoing claims, **characterized in that** the processing means are able and configured to process raw biometric data recorded by the capturing means and to derive therefrom one or more characterizing biometric parameters of the user which identify the captured biometric data in at least substantially unique manner, that the stored biometric data of the authorized user comprise at least one corresponding characterizing biometric parameter and that the processing means are able and configured to compare the at least one characterizing biometric parameter of the user obtained from the raw biometric data to the stored at least one characterizing biometric parameter of the authorized user.

9. System as claimed in claim 8, **characterized in that** the at least one characterizing biometric parameter comprises at least one entity from a group comprising numeric values, vectors and matrices.

10. Personal telecommunication device (50) for use in the system as claimed in one or more of the foregoing claims, comprising at least a primary processing means with a primary operating system, which comprise at least a primary processor unit and primary memory means, wherein the primary processing means are coupled to capturing means (51-54) able and configured to electronically record at least one physical feature of a user, and comprising a plug-in module (40) in the device which enables the user device to perform a subscriber verificatior in a telecommunication network and to at least partially establish and maintain a telecommunication connection (71-73) over a public telecommunication network, particularly a public telephone network,
wherein said plug-in module (40) is provided with secondary processing means with a secondary operating system, which secondary processing means comprise at least a secondary processor unit and secondary memory means,
wherein the primary processing means and the secondary processing means are coupled to each other and are able and configured for mutual co-operation,
wherein biometric data (11-14) of an authorized user are stored in the secondary memory means,
wherein the primary processing means are able and configured to generate an electronic registration of the at least one physical feature of the user in optionally processed form to the secondary processing means,
wherein the secondary processing means are able and configured on the basis of a program code loaded therein to compare the electronic registration of the at least one physical feature of the user obtained from the primary processing means to the biometric data (11-14) of the authorized user stored in the secondary memory means and, when sufficient correspondence is determined, to generate a verification confirmation, and
wherein the secondary processing means are able and configured to exchange the verification confirmation with a transaction server (60) without revealing privacy-sensitive identity data or biometric data (11-14) of the user or the program code used for the verification by means of the telecommunication means and a telecommunication connection (71-73) maintained thereby, thereby authorizing the transaction.

11. Device as claimed in claim 10, **characterized in that** the stored biometric data of the authorized user comprise at least one characterizing biometric parameter which has been calculated from a biometric capture of the authorized user on the basis of a tailored algorithm and which identifies the biometric capture in at least substantially unique manner.

12. Device as claimed in claim 11, **characterized in that** the secondary processing means are able and configured to calculate at least one characterizing biometric parameter from the electronic registration of a physical feature of the user and to compare it to a stored corresponding biometric parameter of the authorized user.

13. Device as claimed in one or more of the claims 10 to 12, **characterized in that** the capturing means comprise at least one sensor from a group comprising an image sensor, a microphone and a fingerprint sensor.

14. Device as claimed in claim 13, **characterized in that** the personal telecommunication device comprises a a smart phone, tablet computer, notebook computer or laptop computer.

15. Device as claimed in one or more of the claims 10 to 14, **characterized in that** the secondary processing means are able and configured to encrypt the verification confirmation and send it in encrypted form.

16. Device as claimed in one or more of the claims 10 to 15, **characterized in that** the telecommunication connection comprises at least one data communication connection from a group of a telecommunication connection in a public telecommunication network, a network connection in a wired and/or wireless private computer network, and an isolated data connection on the basis of radiographic or optical data transfer, such as Infrared, Bluetooth and Near Field communication.

17. Method for performing an electronic transaction with a transaction server (60) able anc configured to offer and perform a transaction in electronic form,
wherein a user makes use of a personal telecommunication device (50) with communicatior means in order to exchange transaction data with the transaction server,
wherein the personal telecommunication device is provided with capturing means (51-54) with which the user records biometric data of the user in electronic form,
wherein the personal telecommunication device is provided with memory means in which biometric data of an authorized user are stored in electronic form,
wherein the personal telecommunication device is provided with processing means able and configured to compare the biometric data captured from the user to the stored biometric data of the authorized user and, in the case they correspond sufficiently, to provide a verification confirmation ,
wherein the memory means and processing means form part of a plug-in module (40), exchangeable in the personal telecommunication device, which enables the user device to perform a subscriber verification in a telecommunication network and to at least partially establish and maintain a telecommunication connection (71-73) therein, in particular a module which gives the device access to a public telecommunication network, more particularly a public telephone network,
wherein the processing means are able and configured to exchange the verification
confirmation with the transaction server for the purpose of authorizing the transaction without revealing privacy-sensitive identity data or biometric data (11-14) of the user or the program code used for the verification by means of the telecommunication means and the telecommunication connection (71-73) maintained
wherein the biometric data of the authorized user have been captured from the authorized user by or at least on behalf of a trusted body and have been stored in the memory means of the plug-in module, and
wherein the plug-in module has been issued to the user by or at least on behalf of the trusted body in order to be received in the personal telecommunication device.

## Patentansprüche

1. System zur elektronischen Durchführung einer Transaktion, umfassend:
- einen Transaktionsserver (60), der in der Lage und konfiguriert ist, eine Transaktion für einen Benutzer anzubieten und durchzuführen,
- ein persönliches Telekommunikationsgerät (50) eines Teilnehmers eines Telekommunikationsnetzes,
- Erfassungsmittel (51-54), die in der Lage und konfiguriert sind, ausgewählte biometrische Daten (11-14) des Benutzers in elektronischer Form zu erfassen,
- Verifizierungsmittel, die in der Lage und konfiguriert sind, die erfassten biometrischen Daten (11-14) des Benutzers mit gespeicherten biometrischen Daten (11-14) des autorisierten Benutzers zu vergleichen und im Falle einer ausreichenden Übereinstimmung zwischen diesen eine Verifizierungsbestätigung zu generieren, und
- Telekommunikationsmittel, die es dem Benutzer ermöglichen, Daten, die eine Verifizierungsbestätigung umfassen, über eine Telekommunikationsverbindung (71-73) mit dem Transaktionsserver (60) auszutauschen, um die Transaktion zu autorisieren,
wobei der Transaktionsserver (60) in der Lage und konfiguriert ist, die Verifizierungsbestätigung zu empfangen und, vorbehaltlich einer daraus ersichtlichen erfolgreichen Benutzerverifizierung, die Transaktion durchzuführen, und
wobei das persönliche Telekommunikationsgerät (50) primäre Verarbeitungsmittel mit mindestens einer primären Prozessoreinheit, primären Speichermitteln und einem primären Betriebssystem umfasst, wobei die primären Verarbeitungsmittel über das primäre Betriebssystem mit den Erfassungsmitteln (51-54) gekoppelt sind, wobei das persönliche Telekommunikationsgerät (50) ein Steckmodul (40) umfasst, das in das Gerät eingesetzt werden kann und das es dem persönlichen Telekommunikationsgerät ermöglicht, eine Teilnehmerüberprüfung in dem Telekommunikationsnetz durchzuführen und die Telekommunikationsverbindung darin herzustellen und aufrechtzuerhalten,
wobei das Steckmodul sekundäre Verarbeitungsmittel umfasst, die in der Lage und konfiguriert sind, eine Anfrage an die Erfassungsmittel (51-54) zu stellen, um die erfassten biometrischen Daten (11-14) zu erhalten, die mindestens eine sekundäre Prozessoreinheit, sekundäre Speichermittel und ein sekundäres Betriebssystem umfassen,
wobei die gespeicherten biometrischen Daten (11-14) des autorisierten Benutzers in den sekundären Speichermitteln des Steckmoduls (40) gespeichert sind, wobei das Steckmodul (40) die Verifizierungsmittel umfasst, und
wobei die sekundäre Prozessoreinheit auf der Grundlage von darin geladenem Programmcode in der Lage und konfiguriert ist, die erfassten biometrischen Daten (11-14) des Benutzers mit den in den sekundären Speichermitteln gespeicherten biometrischen Daten (11-14) des autorisierten Benutzers zu vergleichen und im Falle einer ausreichenden Übereinstimmung die Verifizierungsbestätigung zu generieren, ohne datenschutzrelevante Identitätsdaten oder biometrische Daten (11-14) des Benutzers oder den für die Verifizierung verwendeten Programmcode preiszugeben, wodurch die Transaktion autorisiert wird.

2. System wie im Anspruch 1 beansprucht, **dadurch gekennzeichnet, dass** das Steckmodul mit dem Programmcode für die sekundäre Prozessoreinheit von einer vertrauenswürdigen Stelle ausgegeben wurde.

3. System wie im Anspruch 1 oder 2 beansprucht, **dadurch gekennzeichnet, dass** die Verarbeitungsmittel in der Lage und konfiguriert sind, die Verifizierungsbestätigung zu verschlüsseln und in verschlüsselter Form mit dem Transaktionsserver auszutauschen, wobei der Transaktionsserver mit einer Dekodierungsmitteln versehen ist, die in der Lage und konfiguriert ist, die Verifizierungsbestätigung zu entschlüsseln.

4. System wie in einem oder mehreren der vorstehenden Ansprüche beansprucht, **dadurch gekennzeichnet, dass** das persönliche Telekommunikationsgerät Eingabemittel umfasst, die mit den Verarbeitungsmitteln gekoppelt sind und die es dem Benutzer ermöglichen, einen persönlichen Zugangscode einzugeben und diesen in elektronischer Form an die Verarbeitungsmittel zu übermitteln.

5. System wie im Anspruch 4 beansprucht, **dadurch gekennzeichnet, dass** die Verarbeitungsmittel in der Lage und konfiguriert sind, den von den Eingabemitteln erhaltenen Zugangscode mit einem in den Speichermitteln gespeicherten Zugangscode zu vergleichen.

6. System wie im Anspruch 4 oder 5 beansprucht, **dadurch gekennzeichnet, dass** die Verarbeitungsmittel in der Lage und konfiguriert ist, den von den Eingabemitteln erhaltenen Zugangscode mit dem Transaktionsserver auszutauschen, und dass der Transaktionsserver in der Lage und konfiguriert ist, den erhaltenen Zugangscode mit einem im oder am Transaktionsserver gespeicherten Zugangscode des autorisierten Benutzers zu vergleichen.

7. System wie in einem oder mehreren der vorstehenden Ansprüche beansprucht,
**dadurch gekennzeichnet, dass** die Erfassungsmittel mindestens einen Sensor aus einer Gruppe umfassen, die einen Bildsensor, ein Mikrofon und einen Fingerabdrucksensor umfasst.

8. System wie in einem oder mehreren der vorstehenden Ansprüche beansprucht,
**dadurch gekennzeichnet, dass** die Verarbeitungsmittel in der Lage und konfiguriert sind, die von den Erfassungsmitteln aufgezeichneten rohen biometrischen Daten zu verarbeiten und daraus einen oder mehrere charakterisierende biometrische Parameter des Benutzers abzuleiten, die die erfassten biometrischen Daten auf zumindest im Wesentlichen eindeutige Weise identifizieren, dass die gespeicherten biometrischen Daten des autorisierten Benutzers mindestens einen entsprechenden charakterisierenden biometrischen Parameter umfassen, und dass die Verarbeitungsmittel in der Lage und konfiguriert sind, den mindestens einen charakterisierenden biometrischen Parameter des Benutzers, der aus den erfassten rohen biometrischen Daten erhalten wurde, mit dem mindestens einen gespeicherten charakterisierenden biometrischen Parameter des autorisierten Benutzers zu vergleichen.

9. System wie im Anspruch 8 beansprucht, **dadurch gekennzeichnet, dass** der mindestens eine charakterisierende biometrische Parameter mindestens eine Einheit aus einer Gruppe umfasst, die numerische Werte, Vektoren und Matrizen umfasst.

10. Persönliches Telekommunikationsgerät (50) zur Verwendung in dem System wie in einem oder mehreren der vorstehenden Ansprüche beansprucht, umfassend mindestens ein primäres Verarbeitungsmittel mit einem primären Betriebssystem, die mindestens eine primäre Prozessoreinheit und primäre Speichermittel umfassen, wobei die primären Verarbeitungsmittel mit Erfassungsmitteln (51-54) gekoppelt sind, die in der Lage und konfiguriert sind, mindestens ein physisches Merkmal eines Benutzers elektronisch aufzuzeichnen, und umfassend ein Steckmodul (40) in dem Gerät, das es dem Benutzergerät ermöglicht, eine Teilnehmerüberprüfung in einem Telekommunikationsnetz durchzuführen und wenigstens teilweise eine Telekommunikationsverbindung (71-73) über ein öffentliches Telekommunikationsnetz, insbesondere ein öffentliches Telefonnetz, aufzubauen und aufrechtzuerhalten,
wobei das Steckmodul (40) mit einem sekundären Verarbeitungsmittel mit einem sekundären Betriebssystem versehen ist, welche sekundären Verarbeitungsmittel mindestens eine sekundäre Prozessoreinheit und sekundäre Speichermittel umfassen,
wobei die primären Verarbeitungsmittel und das sekundäre Verarbeitungsmittel miteinander gekoppelt sind und zur gegenseitigen Zusammenarbeit fähig und konfiguriert sind,
wobei biometrische Daten (11-14) eines autorisierten Benutzers in den sekundären Speichermitteln gespeichert sind,
wobei die primären Verarbeitungsmittel in der Lage und konfiguriert sind, eine elektronische Registrierung des mindestens einen physischen Merkmals des Benutzers in optional verarbeiteter Form an die sekundären Verarbeitungsmittel zu generieren,
wobei die sekundären Verarbeitungsmittel auf der Grundlage eines darin geladenen Programmcodes in der Lage und konfiguriert sind, die elektronische Registrierung des mindestens einen physischen Merkmals des Benutzers, das von den primären Verarbeitungsmitteln erhalten wurd, mit den biometrischen Daten (11-14) des autorisierten Benutzers, die in den sekundären Speichermittel gespeichert sind, zu vergleichen und, wenn eine ausreichende Übereinstimmung festgestellt wird, eine Verifizierungsbestätigung zu erzeugen, und
wobei die sekundären Verarbeitungsmittel in der Lage und konfiguriert ist, die Verifizierungsbestätigung mit einem Transaktionsserver (60), ohne datenschutzrelevante Identitätsdaten oder biometrische Daten (11-14) des Benutzers oder den für die Verifizierung verwendeten Programmcode preiszugeben, mittels der Telekommunikationsmittel und einer durch diese aufrecht erhaltenen Telekommunikationsverbindung (71-73) auszutauschen, wodurch die Transaktion autorisiert wird.

11. Gerät wie im Anspruch 10 beansprucht, **dadurch gekennzeichnet, dass** die gespeicherten biometrischen Daten des autorisierten Benutzers mindestens einen charakterisierenden biometrischen Parameter umfassen, der aus einer biometrischen Erfassung des autorisierten Benutzers auf der Grundlage eines maßgeschneiderten Algorithmus berechnet wurde und der die biometrische Erfassung auf mindestens im Wesentlichen eindeutige Weise identifiziert.

12. Gerät wie Anspruch 11 beansprucht, **dadurch gekennzeichnet, dass** die sekundären Verarbeitungsmittel in der Lage und konfiguriert sind, mindestens einen charakterisierenden biometrischen Parameter aus der elektronischen Registrierung eines physischen Merkmals des Benutzers zu berechnen und diesen mit einem gespeicherten entsprechenden biometrischen Parameter des autorisierten Benutzers zu vergleichen.

13. Gerät wie in einem oder mehreren der Ansprüche 10 bis 12 beansprucht, **dadurch gekennzeichnet, dass** die Erfassungsmittel mindestens einen Sensor aus einer Gruppe umfassen, die einen Bildsensor, ein Mikrofon und einen Fingerabdrucksensor umfasst.

14. Gerät wie in Anspruch 13 beansprucht, **dadurch gekennzeichnet, dass** das persönliche Telekommunikationsgerät ein Smartphone, einen Tablet-Computer, einen Notebook-Computer oder einen Laptop-Computer umfasst.

15. Gerät wie in einem oder mehreren der Ansprüche 10 bis 14 beansprucht, **dadurch gekennzeichnet, dass** die sekundären Verarbeitungsmittel in der Lage und konfiguriert sind, die Verifizierungsbestätigung zu verschlüsseln und in verschlüsselter Form zu senden.

16. Gerät wie in einem oder mehreren der Ansprüche 10 bis 15 beansprucht, **dadurch gekennzeichnet, dass** die Telekommunikationsverbindung mindestens eine Datenkommunikationsverbindung aus einer Gruppe einer Telekommunikationsverbindung in einem öffentlichen Telekommunikationsnetz, einer Netzwerkverbindung in einem drahtgebundenen und/oder drahtlosen privaten Computernetzwerk und einer isolierten Datenverbindung auf der Grundlage einer radiografischen oder optischen Datenübertragung, wie beispielsweise Infrarot, Bluetooth und Nahfeldkommunikation, umfasst.

17. Verfahren zur Durchführung einer elektronischen Transaktion mit einem Transaktionsserver (60), der in der Lage und konfiguriert ist, eine Transaktion in elektronischer Form anzubieten und durchzuführen,
wobei ein Benutzer ein persönliches Telekommunikationsgerät (50) mit Kommunikationsmitteln verwendet, um Transaktionsdaten mit dem Transaktionsserver auszutauschen,
wobei das persönliche Telekommunikationsgerät mit Erfassungsmitteln (51-54) ausgestattet ist, mit denen der Benutzer biometrische Daten des Benutzers in elektronischer Form aufzeichnet,
wobei das persönliche Telekommunikationsgerät mit Speichermitteln versehen ist, in denen biometrische Daten eines autorisierten Benutzers in elektronischer Form gespeichert sind,
wobei das persönliche Telekommunikationsgerät mit Verarbeitungsmitteln versehen ist, die in der Lage und konfiguriert sind, die vom Benutzer erfassten biometrischen Daten mit den gespeicherten biometrischen Daten des autorisierten Benutzers zu vergleichen und, falls sie ausreichend übereinstimmen, eine Verifizierungsbestätigung bereitzustellen,
wobei die Speichermittel und Verarbeitungsmittel Teil eines Steckmoduls (40) bilden, das im persönlichen Telekommunikationsgerät austauschbar ist, welches es dem Benutzergerät ermöglicht eine Teilnehmerüberprüfung in einem Telekommunikationsnetz durchführen und zumindest teilweise eine Telekommunikationsverbindung (71-73) darin herzustellen und aufrechtzuerhalten, insbesondere ein Modul, das dem Gerät Zugang zu einem öffentlichen Telekommunikationsnetz, weiter insbesondere einem öffentlichen Telefonnetz, verschafft,
wobei die Verarbeitungsmittel in der Lage und konfiguriert ist, die Verifizierungsbestätigung mit dem Transaktionsserver zum Zwecke der Autorisierung der Transaktion, ohne datenschutzrelevante Identitätsdaten oder biometrische Daten (11-14) des Benutzers oder den für die Verifizierung verwendeten Programmcode preiszugeben, mittels den Telekommunikationsmitteln und der aufrecht erhaltenen Telekommunikationsverbindung (71-73) zu auszutauschen,
wobei die biometrischen Daten des autorisierten Benutzers von oder zumindest im Auftrag einer vertrauenswürdigen Stelle erfasst wurden und in den Speichermitteln des Steckmoduls gespeichert wurden, und
wobei das Steckmodul dem Benutzer von oder zumindest im Auftrag der vertrauenswürdigen Stelle ausgehändigt wurde, um in das persönliche Telekommunikationsgerät aufgenommen zu werden.

## Revendications

1. Système permettant d'effectuer une transaction par voie électronique, comprenant : un serveur de transaction (60) capable et configuré pour proposer et effectuer une transaction pour un utilisateur, un dispositif de télécommunication personnel (50) d'un abonné à un réseau de télécommunication, des moyens de capture (51-54) capables et configurés pour capturer des données biométriques sélectionnées (11-14) de l'utilisateur sous forme électronique, des moyens de vérification capables et configurés pour comparer les données biométriques capturées (11-14) de l'utilisateur par rapport aux données biométriques stockées (11-14) de l'utilisateur autorisé et, en cas de correspondance suffisante entre elles, pour générer une confirmation de vérification, et des moyens de télécommunication permettant à l'utilisateur d'échanger des données comprenant une confirmation de vérification avec le serveur de transaction (60) par le biais d'une connexion de télécommunication (71-73), afin d'autoriser la transaction, le serveur de transaction (60) étant capable et configuré pour recevoir la confirmation de vérification et, sous réserve d'une vérification réussie de l'utilisateur qui en ressort, pour effectuer la transaction, et le dispositif de télécommunication personnel (50) comprenant des moyens de traitement primaire avec au moins une unité de traitement primaire, des moyens de mémoire primaire et un système d'exploitation primaire, ces moyens de traitement primaire étant couplés aux moyens de capture (51-54) au moyen du système d'exploitation primaire, le dispositif de télécommunication personnel (50) comprenant un module enfichable (40) qui peut être placé dans le dispositif et qui permet au dispositif de télécommunication personnel d'effectuer une vérification de l'abonné dans le réseau de télécommunication et d'établir et de maintenir la connexion de télécommunication à l'intérieur, ledit module enfichable comprenant des moyens de traitement secondaires capables et configurés pour adresser une demande aux moyens de capture (51-54) afin d'obtenir les données biométriques capturées (11-14), comprenant au moins une unité de traitement secondaire, des moyens de mémoire secondaires et un système d'exploitation secondaire, les données biométriques (11-14) de l'utilisateur autorisé étant stockées dans la mémoire secondaire du module enfichable (40), le module enfichable (40) comprenant les moyens de vérification, et l'unité de traitement secondaire étant capable et configurée sur la base du code de programme qui y est chargé pour comparer les données biométriques capturées (11-14) de l'utilisateur aux données biométriques (11-14) de l'utilisateur autorisé stockées dans la mémoire secondaire et, dans le cas d'une correspondance suffisante, pour générer la confirmation de vérification sans révéler les données d'identité ou les données biométriques (11-14) sensibles de l'utilisateur ou le code de programme utilisé pour la vérification, autorisant de ce fait la transaction.

2. Système selon la revendication 1, **caractérisé par le fait que** le module enfichable contenant le code de programme pour l'unité de traitement secondaire a été émis par un organisme de confiance.

3. Système selon la revendication 1 ou 2, **caractérisé par le fait que** les moyens de traitement sont capables et configurés pour crypter la confirmation de vérification et l'échanger sous forme cryptée avec le serveur de transaction, le serveur de transaction étant doté de moyens de décodage capables et configurés pour décrypter la confirmation de vérification.

4. Système selon l'une ou plusieurs des revendications précédentes, **caractérisé par le fait que** le dispositif de télécommunication personnel comprend des moyens d'entrée qui sont couplés aux moyens de traitement et qui permettent à l'utilisateur d'entrer un code d'accès personnel et de le fournir sous forme électronique aux moyens de traitement.

5. Système selon la revendication 4, **caractérisé par le fait que** les moyens de traitement sont capables et configurés pour comparer le code d'accès obtenu par les moyens d'entrée à un code d'accès stocké dans les moyens de mémoire.

6. Système selon la revendication 4 ou 5, **caractérisé par le fait que** les moyens de traitement sont capables et configurés pour échanger le code d'accès obtenu à partir des moyens de saisie avec le serveur de transaction et que le serveur de transaction est capable et configuré pour comparer le code d'accès obtenu à un code d'accès de l'utilisateur autorisé stocké dans ou sur le serveur de transaction.

7. Système selon l'une ou plusieurs des revendications précédentes, **caractérisé par le fait que** les moyens de capture comprennent au moins un capteur appartenant à un groupe comprenant un capteur d'images, un microphone et un capteur d'empreintes digitales.

8. Système selon l'une ou plusieurs des revendications précédentes, **caractérisé par le fait que** les moyens de traitement sont capables et configurés pour traiter les données biométriques brutes enregistrées par les moyens de capture et pour en déduire un ou plusieurs paramètres biométriques caractérisant l'utilisateur qui identifient les données biométriques capturées d'une manière au moins substantiellement unique, que les données biométriques stockées de l'utilisateur autorisé comprennent au moins un paramètre biométrique caractérisant correspondant et que les moyens de traitement sont capables et configurés pour comparer le au moins un paramètre biométrique caractérisant l'utilisateur obtenu à partir des données biométriques brutes au moins un paramètre biométrique caractérisant stocké de l'utilisateur autorisé.

9. Système selon la revendication 8, **caractérisé par le fait que** l'au moins un paramètre biométrique caractérisant comprend au moins une entité d'un groupe comprenant des valeurs numériques, des vecteurs et des matrices.

10. Dispositif de télécommunication personnel (50) destiné à être utilisé dans le système visé dans l'une ou plusieurs des revendications précédentes, comprenant au moins un moyen de traitement primaire avec un système d'exploitation primaire, qui comprend au moins une unité de traitement primaire et un moyen de mémoire primaire, les moyens de traitement primaires étant couplés à des moyens de capture (51-54) capables et configurés pour enregistrer électroniquement au moins une caractéristique physique d'un utilisateur, et comprenant un module enfichable (40) dans le dispositif qui permet au dispositif utilisateur d'effectuer une vérification d'abonné dans un réseau de télécommunication et d'établir et de maintenir au moins partiellement une connexion de télécommunication (71-73) sur un réseau de télécommunication public, en particulier un réseau téléphonique public, ledit module enfichable (40) étant doté de moyens de traitement secondaires avec un système d'exploitation secondaire, ces moyens de traitement secondaires comprenant au moins une unité de traitement secondaire et des moyens de mémoire secondaires, les moyens de traitement primaires et les moyens de traitement secondaires étant couplés les uns aux autres et sont capables de coopérer mutuellement et configurés à cet effet, les données biométriques (11-14) d'un utilisateur autorisé étant stockées dans les moyens de mémoire secondaires, les moyens de traitement primaires étant capables et configurés pour générer un enregistrement électronique d'au moins une caractéristique physique de l'utilisateur sous une forme éventuellement traitée vers les moyens de traitement secondaires, les moyens de traitement secondaires étant capables et configurés sur la base d'un code de programme chargé dans ces moyens pour comparer l'enregistrement électronique d'au moins une caractéristique physique de l'utilisateur obtenu à partir des moyens de traitement primaires aux données biométriques (11-14) de l'utilisateur autorisé stockées dans les moyens de mémoire secondaires et, lorsqu'une correspondance suffisante est déterminée, pour générer une confirmation de vérification, et les moyens de traitement secondaires étant capables et configurés pour échanger la confirmation de vérification avec un serveur de transaction (60) sans révéler les données d'identité ou les données biométriques (11-14) de l'utilisateur sensibles à la vie privée ou le code de programme utilisé pour la vérification au moyen des moyens de télécommunication et d'une connexion de télécommunication (71-73) maintenue par ceux-ci, autorisant ainsi la transaction.

11. Dispositif selon la revendication 10, **caractérisé par le fait que** les données biométriques stockées de l'utilisateur autorisé comprennent au moins un paramètre biométrique caractérisant qui a été calculé à partir d'une capture biométrique de l'utilisateur autorisé sur la base d'un algorithme personnalisé et qui identifie la capture biométrique d'une manière au moins substantiellement unique.

12. Dispositif selon la revendication 11, **caractérisé par le fait que** les moyens de traitement secondaires sont capables et configurés pour calculer au moins un paramètre biométrique caractérisant à partir de l'enregistrement électronique d'une caractéristique physique de l'utilisateur et pour le comparer à un paramètre biométrique correspondant stocké de l'utilisateur autorisé.

13. Dispositif selon l'une ou plusieurs des revendications 10 à 12, **caractérisé par le fait que** les moyens de capture comprennent au moins un capteur appartenant à un groupe comprenant un capteur d'images, un microphone et un capteur d'empreintes digitales.

14. Dispositif selon la revendication 13, **caractérisé par le fait que** le dispositif de télécommunication personnel comprend un téléphone intelligent, une tablette, un ordinateur carnet de notes ou un ordinateur portable.

15. Dispositif selon l'une ou plusieurs des revendications 10 à 14, **caractérisé par le fait que** les moyens de traitement secondaires sont capables et configurés pour crypter la confirmation de vérification et l'envoyer sous forme cryptée.

16. Dispositif selon l'une ou plusieurs des revendications 10 à 15, **caractérisé par le fait que** la connexion de télécommunication comprend au moins une connexion de communication de données parmi un groupe de connexions de télécommunication dans un réseau de télécommunication public, une connexion de réseau dans un réseau informatique privé câblé et/ou sans fil, et une connexion de données isolée sur la base d'un transfert de données radiographiques ou optiques, telles que l'infrarouge, le Bluetooth et la communication en champ proche.

17. Méthode pour effectuer une transaction électronique avec un serveur de transaction (60) capable et configuré pour offrir et effectuer une transaction sous forme électronique, un utilisateur utilisant un dispositif de télécommunication personnel (50) avec des moyens de communication afin d'échanger des données de transaction avec le serveur de transaction, le dispositif de télécommunication personnel étant fourni avec des moyens de capture (51-54) avec lesquels l'utilisateur enregistre des données biométriques de l'utilisateur sous forme électronique, le dispositif de télécommunication personnel étant doté de moyens de mémoire les données biométriques d'un utilisateur autorisé étant stockées sous forme électronique, le dispositif de télécommunication personnel étant doté de moyens de traitement capables et configurés pour comparer les données biométriques capturées de l'utilisateur aux données biométriques stockées de l'utilisateur autorisé et, en cas de correspondance suffisante, pour fournir une confirmation de vérification, les moyens de mémoire et les moyens de traitement faisant partie d'un module enfichable (40), échangeable dans le dispositif de télécommunication personnel, qui permet au dispositif utilisateur d'effectuer une vérification d'abonné dans un réseau de télécommunication et d'y établir et maintenir au moins partiellement une connexion de télécommunication, en particulier un module qui fournit au dispositif l'accès à un réseau de télécommunication public, plus particulièrement à un réseau téléphonique public, les moyens de traitement étant capables et configurés pour échanger la confirmation de vérification avec le serveur de transaction dans le but d'autoriser la transaction sans révéler les données d'identité ou les données biométriques (11-14) sensibles de l'utilisateur ou le code de programme utilisé pour la vérification au moyen des moyens de télécommunication et de la connexion de télécommunication (71-73) maintenue, les données biométriques de l'utilisateur autorisé ayant été capturées à partir de l'utilisateur autorisé par ou au moins au nom d'un organisme de confiance et ont été stockées dans les moyens de mémoire du module enfichable, et le module enfichable ayant été délivré à l'utilisateur par ou au moins au nom de l'organisme de confiance afin d'être reçu dans le dispositif de télécommunication personnel
